# EUROPEAN PATENT SPECIFICATION

(11) **EP 0 527 793 B1**
(45) Date of publication and mention of the grant of the patent: **09.09.1998**
(21) Application number: 91908209.9
(22) Date of filing: 03.05.1991
(51) Int. Cl.: H01M 10/34, H01M 10/52

(54) **CATALYTIC RECOMBINATION OF HYDROGEN IN ALKALINE CELLS**
KATALYTISCHE REKOMBINATION VON WASSERSTOFF IN ALKALISCHEN BATTERIEN
RECOMBINAISON CATALYTIQUE D'HYDROGENE DANS DES PILES ALCALINES

(30) Priority: 09.05.1990 US 520820
(43) Date of publication of application: 24.02.1993
(73) Proprietor: BATTERY TECHNOLOGIES INC., Mississauga Ontario L5L 1J9 (CA)
(72) Inventor: TOMANTSCHGER, Klaus, Mississauga, Ontario L5N 3J6 (CA); ORAN, Erkut, Willowdale, Ontario M2M 4H2 (CA); KORDESCH, Karl, Richmond Hill, Ontario L4B 1V5 (CA)
(74) Representative: Rackham, Anthony Charles
(86) International application number: CA9100149
(87) International publication number: WO9117581

(56) References cited:
- WO-A-89/04067
- GB-A- 2 091 934
- US-A- 3 893 870
- US-A- 4 252 666

## Description

This invention relates to rechargeable, alkaline, sealed cells such as alkaline zinc/manganese dioxide cells. In particular, the invention relates to the use of a catalyst for the recombination of hydrogen in the cell. The invention aims to provide means of recombining hydrogen, which may be evolved during storage, recharging, use or even in abuse. Thus, loss of water may be avoided and the risk of pressure build up within the cell and cell leakage may be reduced.

The prior art has concerned itself, for many years, with the problem of reducing or eliminating the loss of water in galvanic cells using aqueous electrolyte, and also with avoiding build up of excessive gas pressure in sealed cells. Hydrogen gas is evolved during charge or standby by several electrode materials such as aluminum, magnesium, zinc, iron, lead etc. The electrodes in general do not have the capability of recombining the hydrogen and the evolved gas is usually vented, causing water loss, or pressure build up in hermetically sealed cells. In sealed cells, depending on the amount of hydrogen present and the rate of generation, excessive gas pressure can build up causing rupture of the safety vent and loss of electrolyte -- resulting in cell failure and electrolyte leakage. It has previously been found that cells having a porous manganese dioxide cathode have the capability of recombining the hydrogen, provided catalytically active materials are applied to the cathode.

Two approaches are often used in efforts to solve the problems. These are:
1. Catalytic recombination of hydrogen and oxygen inside or outside the battery; in the latter case, provisions are made for the return of the product water to the electrolyte chamber [U.S. 3,630,778 (1971), U.S. 3,598,653 (1971), U.S. 3,662,398 (1971), U.S. 3,701,691 (1972)].
2. Use of an auxiliary (third) electrode as an overcharge recombination reactor as described in "Electrochem. Technol., 4, 383 (1966) by P. Ruetschi and J.B. Ockerman.

Kozawa *et al* in Electrochemica Acta Volume 26, No. 10 at pages 1489 to 1493, published in 1981, discussed the use of silver-catalyzed manganese dioxide as a hydrogen absorber. There, considerable studies were made by mixing various ranges of AgO or Ag₂O with electrolytic manganese dioxide (EMD), and in some instances by mixing EMD with AgNO₃ solution. It was found, however, that at silver concentrations below about 0.3% of the EMD content, the recombination rate of the silver-catalysed MnO₂ was essentially no different than that of uncatalysed EMD.

Indeed, those same two authors in KORDESCH et al United States Patent No. 4,224,384 report excellent hydrogen gas recombination capability of dry MnO₂ powder catalysed with salts or oxides of platinum, palladium, ruthenium, rhodium, arsenic and lead. These materials, however, when employed in a wetted MnO₂ matrix, did not show significant hydrogen recombination rates at near atmospheric pressures. It has now surprisingly been found that these materials do exhibit hydrogen recombination properties when at least partially wetted by electrolyte, and in the pressure range of from substantially zero gauge pressure up to the relief pressure of the cell.

WO 89/04067 describes a cell in which hydrogen may evolve what has an auxiliary electrode material which may be, inter alia, silver or an oxide thereof.

According to the invention there is provided a sealed rechargeable electrochemical cell in which hydrogen may evolve, the cell having a cathode comprising manganese dioxide and graphite, a zinc anode, an aqueous potassium hydroxide electrolyte contacting the anode and the cathode, and a catalyst which facilitates the recombination of the hydrogen with the manganese dioxide, the catalyst being at least partially wetted by the electrolyte and being admixed to the manganese dioxide cathode so that the manganese dioxide cathode and the catalyst are in intimate physical contact with each other with no substantial electrical resistance therebetween, characterized in that the catalyst is:
a) silver oxide, present in the cell in an amount to provide the equivalent of 10 mg of silver in a AA cell,
b) silver supported on graphite, present in the cell in an amount to provide the equivalent of 10 mg of silver in a AA cell, or
c) silver supported on carbon black, present in the cell in an amount to provide the equivalent of 1.9 to 5 mg of silver in a AA cell.

The auxiliary cathode material may comprise a discrete element located in the cell, or it may be distributed throughout the cathode.

The substrate, when used, may be carbon or graphite.

The auxiliary cathode material may be provided either in admixture with the manganese dioxide cathode, or as a discrete auxiliary electrode. In either event, it is in electronic contact with the cathode, and with no substantial electrical resistance between them. When a cathode comprises a plurality of pellets, the auxiliary cathode material may be in admixture with only one or all of the pellets; and if the cathode is extruded as a single sleeve, the auxiliary cathode material may be distributed throughout the cathode.

When the auxiliary cathode material is provided as an auxiliary discrete electrode, and the manganese dioxide cathode is cylindrically located about an anode core, then the auxiliary electrode may suitably be an annulus or ring of similar diameters to the cathode and located in electronic contact with it at one end of the cathode, or between pellets.

The present invention may provide economic and effective means of recombining hydrogen gas in galvanic cells.

If an annulus is used as an auxiliary catalyzed electrode, then conveniently the auxiliary electrode may be a gas diffusion electrode. Gas diffusion electrodes that may be particularly applicable to the present invention are described in a United States Patent 5,069,988, and can be employed if higher recombination current densities are desired.

Embodiments of the invention will now be described by way of illustration with reference to the drawings in conjunction with the Examples, describing various electrodes of the invention and their operating characteristics.
Figure 1 is a vertical cross section of a typical embodiment of the invention;
Figure 2 is a vertical cross section of another typical embodiment of the invention;
Figure 3 is a graph comparing the operating characteristics of prior art and inventive cells as described in Example I.

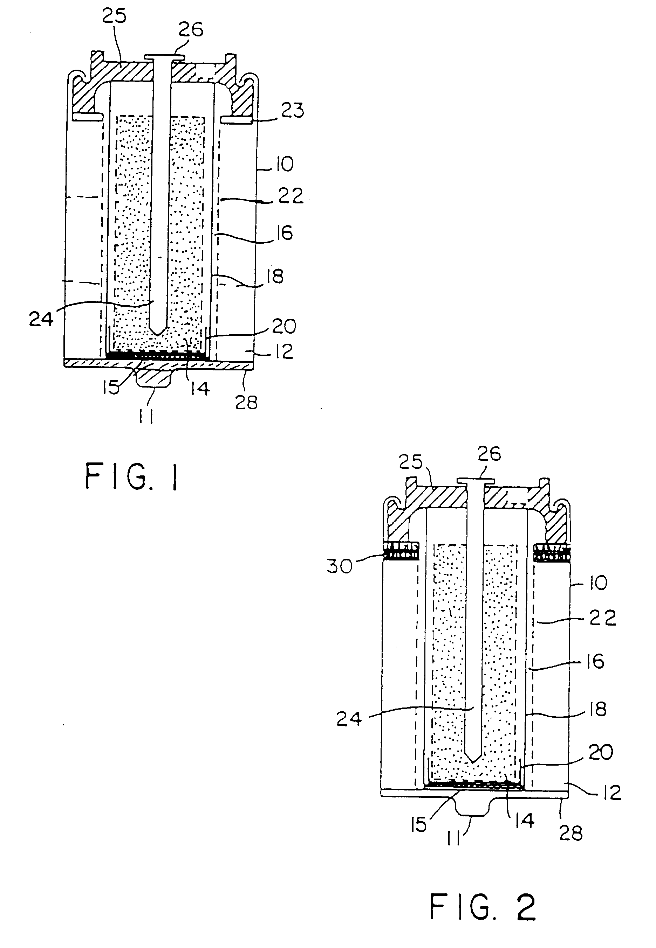

Figures 1 and 2 of the drawings show two different embodiments of typical cells embodying the present invention. In both cases the cell comprises a steel can 10 housing a conventional manganese dioxide cathode 12 and zinc anode 14. The base of can 10 has boss 11 forming the cathode contact. The cathode 12 may comprise finely divided manganese dioxide and graphite, and is separated from anode 14 which may comprise zinc powder, by an electrolyte permeable separator 16. The electrolyte, which may be aqueous potassium hydroxide, permeates the zinc powder of anode 14 and cathode 12 through separator 16. The cells may be primary or secondary.

As shown, the anode may be confined by a basket 18, made for example, of Chicopee™ Rayon/polyvinyl alcohol. An oxygen recombination catalyst may also be used, for example, as described in United States Patent 4,900,642. The basket 18 is provided with an end cap 20. Optionally, the cathode 12 is confined into cylindrical shape by a screen 22 and an annular plastic spacer 23 or a plastic closure 25. The plastic spacer 23 may be a perforated disc of material such as polyethylene.

A current collector nail 24 projects into the anode 14 through the plastic closure 25, with its head 26 being outside of the cover 25 to form the anode contact. The cover 25 seals the can 12 by crimping formed around its edge.

Figure 1 suggests the use of an auxiliary discrete cathode disk 28 formed of catalytically active carbon and located on the bottom of can 10 below insulating disk 15. The auxiliary cathode disk 28 is in physical and electronic contact with cathode 12, and is wetted by electrolyte dispersed in the can 10.

The embodiment of Figure 2 differs from that of Figure 1 in that, an auxiliary cathode annulus or washer 30 is placed beneath plastic closure 25, in physical and electronic contact with cathode 12. It, too, is wetted by the electrolyte dispersed in the can 10.

Figures 1 and 2 both show embodiments in which discrete auxiliary cathodes are used. However, when the auxiliary cathode material is mixed with the manganese dioxide cathode, then the inventive cell may be as described with reference to either Figures 1 or 2, but neither disk 28 nor washer 30 would be present, and the cathode 12 incorporates the auxiliary material. As well, the cathode may comprise a number of pellets (such as the three pellets shown in Figure 1), or it may be extruded. Any or all of the pellets, or the extruded cathode, may have the auxiliary cathode material admixed with the manganese dioxide. Still further, if the cell has rectangular cathodes for flat plate or jelly roll cells, the auxiliary cathode material may be admixed throughout the cathode; or it may be placed in the cell in the form of an auxiliary electrode, or even in a catalytically active paste deposited as a strip on the cathode, or coextruded therewith.

### Example I :

Two groups of cells were prepared, where the cathodes of each of the groups of cells comprised three pellets. The specific cathode compositions are described below for each group;

| **CATHODE FORMULATIONS** | | |
|---|---|---|
| | Control Group | Ag/C Group |
| MnO₂ | 80 | 80 |
| Graphite | 10 | 10 |
| Carbon Black | 10 | 9 |
| Ag₂O | - | - |
| 10% Pt/C | - | - |
| 10% Ag/C | - | 1 |
| 9 N KOH | 7 | 7 |

In the Ag/C Group, the bottom and middle pellets had the same cathode formulation as the Control Group; but the top pellet contained 10% silver on carbon black, admixed with the cathode composition for each respective top pellet.

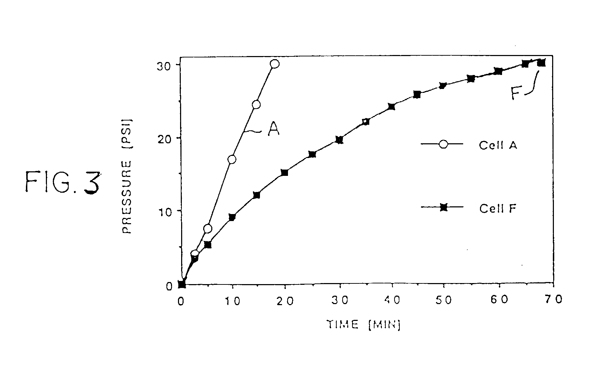

The cells were placed into a half cell arrangement. After each cathode was partially predischarged, the cells were sealed and hydrogen was generated at a rate of 21 ml hydrogen per hour. The increase of internal cell pressure with time was determined, and those results are shown in Figure 3. Curve F shows the results for the Ag/C Group.

An analysis of Figure 3 shows that by the provision of 11 mg of silver, consisting of 10% metal supported on a porous carbon carrier, the amount of catalytically active hydrogen recombination material is only 0.125% of the EMD of the top pellet, and yet superior results were achieved.

### Example 2:

Four groups of size "AA" cells were assembled. The first group was prepared with Ag₂O mixed to provide a silver loading of 10 mg. The second group also had a silver loading of 10 mg, and used graphite as a silver carrier. The third and fourth groups used carbon black as a silver carrier, giving silver loading of 5 mg and 1.9 mg, respectively.

The first and second groups were then assembled in two sub-groups each, where the first sub-group in each case had the hydrogen recombination catalyst only in the top pellet, and the second sub-group in each case had the hydrogen recombination catalyst throughout the entire cathode. The third group also was prepared in two sub-groups, where the first group had the hydrogen recombination catalyst placed in the cell as a discrete element in the form of a top washer above the upper pellet; and the second sub-group had the hydrogen recombination catalyst mixed throughout the entire cathode. The fourth group had a single sub-group, with the hydrogen recombination catalyst being found only in the top pellet of the cell.

In each case, the cells were assembled without their closures, and then they were placed in a test fixture which, itself, was filled with hydrogen gas to a pressure of 0.68 N/mm² (100 psi). The hydrogen recombination rate for all the various groups and sub-groups was determined over a period of 24 hours at room temperature. The results of those tests are shown in the following table:

| **HYDROGEN RECOMBINATION AT ROOM TEMPERATURE** | | | | |
|---|---|---|---|---|
| Catalyst Location | Ag₂O Group (10 mg Ag) | Ag/Graphite Group (10 mg Ag) | Ag/C Group (5 mg Ag) | Ag/C Group (1.9 mg Ag) |
| Top Washer | -- | -- | 5 ml | -- |
| Top Pellet | 4 ml | 8 ml | -- | 3 ml |
| Entire Cathode | 6 ml | 4 ml | 4.5 ml | -- |

The use of commercially available metallic platinum and metallic silver, or their oxides, suitable supported on a carrier such as graphite or carbon black, as a hydrogen recombination catalyst, has been clearly demonstrated, as have other hydrogen recombination catalysts.

## Claims

1. A sealed rechargeable electrochemical cell in which hydrogen may evolve, the cell having a cathode comprising manganese dioxide and graphite, a zinc anode, an aqueous potassium hydroxide electrolyte contacting the anode and the cathode, and a catalyst which facilitates the recombination of the hydrogen with the manganese dioxide, the catalyst being at least partially wetted by the electrolyte and being admixed to the manganese dioxide cathode so that the manganese dioxide cathode and the catalyst are in intimate physical contact with each other with no substantial electrical resistance therebetween, characterized in that the catalyst is:
a) silver oxide, present in the cell in an amount to provide the equivalent of 10 mg of silver in a AA cell,
b) silver supported on graphite, present in the cell in an amount to provide the equivalent of 10 mg of silver in a AA cell, or
c) silver supported on carbon black, present in the cell in an amount to provide the equivalent of 1.9 to 5 mg of silver in a AA cell.

2. A cell as claimed in Claim 1 in which the hydrogen recombination catalyst is distributed throughout the entire cathode.

3. A cell as claimed in Claim 1 in which the manganese dioxide cathode comprises a plurality of discrete pellets and the hydrogen recombination catalyst is in the top pellet of the cell.

4. A cell as claimed in any preceding claim in which the hydrogen is pressurized within the cell in the range of from substantially zero gauge pressure up to the relief pressure of the cell.

5. A cell as claimed in any preceding claim in which the anode comprises zinc powder immobilised in a gel of the electrolyte.

6. A cell as claimed in claims 1 to 4 in which the anode comprises a paste of zinc powder.

7. A cell as claimed in any preceding claim in which the manganese dioxide is mixed with 5 to 20% by weight of graphite.

## Patentansprüche

1. Aufladbare elektrochemische, versiegelte Zelle, in der sich Wasserstoff bilden kann, wobei diese Zelle über eine Mangandioxid und Graphit enthaltende Katode, eine Zinkanode, einen mit der Anode und der Katode in Kontakt stehenden wäßrigen Kaliumhydroxid-Elektrolyt sowie einen die Rekombination von Wasserstoff mit dem Mangandioxid positiv beeinflussenden Katalysator verfügt, wobei der Katalysator zumindest teilweise vom Elektrolyt benetzt wird und der Mangandioxidkatode beigemischt ist, so daß sich die Mangandioxidkatode und der Katalysator in einem engen stofflichen Kontakt miteinander befinden und zwischen beiden ein nur unerheblicher elektrischer Widerstand vorhanden ist, dadurch gekennzeichnet, daß der Katalysator gebildet wird von:
a) Silberdioxid, das in der Zelle in einer das Äquivalent von 10 mg Silber in einer AA-Zelle ergebenden Menge vorhanden ist,
b) auf Graphit aufgebrachtem Silber, das in der Zelle in einer das Äquivalent von 10 mg Silber in einer AA-Zelle ergebenden Menge vorhanden ist, oder
c) auf Ruß aufgebrachtem Silber, das in der Zelle in einer das Äquivalent von 1,9 bis 5 mg Silber in einer AA-Zelle ergebenden Menge vorhanden ist.

2. Zelle nach Anspruch 1, in der der Wasserstoffrekombinationskatalysator in der gesamten Katode verteilt ist.

3. Zelle nach Anspruch 1, in der die Mangandioxidkatode aus einer Anzahl von einzelnen Pellets besteht und der Wasserstoffrekombinationskatalysator in dem zuoberst befindlichen Pellet enthalten ist.

4. Zelle nach einem der vorstehenden Ansprüche, in der sich der Wasserstoff innerhalb der Zelle unter einem Druck in dem Bereich zwischen dem Überdruck gleich oder nahezu Null und dem Entlastungsdruck der Zelle befindet.

5. Zelle nach einem der vorstehenden Ansprüche, in der die Anode in einem Gel des Elektrolyten immobilisiertes Zinkpulver enthält.

6. Zelle nach Anspruch 1 bis 4, in der die Anode ein Paste aus Zinkpulver enthält.

7. Zelle nach einem der vorstehenden Ansprüche, in der das Mangandioxid mit 5 bis 20 Masse% Graphit gemischt ist.

## Revendications

1. Pile électrochimique rechargeable étanche dans laquelle de l'hydrogène peut se dégager, la pile ayant une cathode comprenant du bioxyde de manganèse et du graphite, une anode en zinc, un électrolyte d'hydroxyde de potassium aqueux en contact avec l'anode et la cathode, et un catalyseur qui facilite la recombinaison de l'hydrogène avec le bioxyde de manganèse, le catalyseur étant au moins partiellement mouillé par l'électrolyte et étant mélangé à la cathode en bioxyde de manganèse de telle sorte que la cathode en bioxyde de manganèse et le catalyseur soient en contact physique intime l'un avec l'autre sans résistance électrique substantielle entre eux, caractérisée en ce que le catalyseur est :
a) de l'oxyde d'argent, présent dans la pile en quantité fournissant l'équivalent de 10 mg d'argent dans une pile AA,
b) de l'argent sur support en graphite, présent dans la pile en quantité fournissant l'équivalent de 10 mg d'argent dans une pile AA, ou
c) de l'argent sur support en noir de carbone, présent dans la pile en quantité fournissant l'équivalent de 1,9 à 5 mg d'argent dans une pile AA.

2. Pile selon la Revendication 1, dans laquelle le catalyseur de recombinaison de l'hydrogène est réparti dans toute la cathode.

3. Pile selon la Revendication 1, dans laquelle la cathode en bioxyde de manganèse comprend plusieurs pastilles discrètes et le catalyseur de recombinaison de l'hydrogène est dans la pastille supérieure de la pile.

4. Pile selon l'une quelconque des revendications précédentes, dans laquelle l'hydrogène est pressurisé à l'intérieur de la pile dans la gamme allant d'une pression manométrique substantiellement nulle à la pression de décharge de la pile.

5. Pile selon l'une quelconque des revendications précédentes, dans laquelle l'anode comprend de la poudre de zinc immobilisée dans un gel de l'électrolyte.

6. Pile selon les revendications 1 à 4, dans laquelle l'anode comprend une pâte de poudre de zinc.

7. Pile selon l'une quelconque des revendications précédentes, dans laquelle le bioxyde de manganèse est mélangé avec 5 à 20% par poids de graphite.
